# EUROPEAN PATENT SPECIFICATION

(11) **EP 4 290 324 B1**
(45) Date of publication and mention of the grant of the patent: **21.05.2025**
(21) Application number: 23159708.9
(22) Date of filing: 02.03.2023
(51) Int. Cl.: G05B 19/418, B05B 15/50

(54) **AUTOMATIC SKID OFFLINE-CLEANING GUIDANCE AND CONTROL SYSTEM AND METHOD**
LEIT- UND STEUERSYSTEM UND VERFAHREN FÜR AUTOMATISCHE OFFLINE-REINIGUNG VON KUFEN
SYSTÈME ET PROCÉDÉ DE COMMANDE ET DE GUIDAGE AUTOMATIQUE DE NETTOYAGE HORS LIGNE DE PATINS

(30) Priority: 06.06.2022 CN 202210630815
(43) Date of publication of application: 13.12.2023
(73) Proprietor: Chongqing Changan Automobile Co., Ltd., Chongqing 400023 (CN)
(72) Inventor: Chang, Yongsheng, Chongqing, 400023 (CN); Feng, Sheng, Chongqing, 400023 (CN); Ma, Zhifei, Chongqing, 400023 (CN); Yao, Lei, Chongqing, 400023 (CN); Zhang, Jinsong, Chongqing, 400023 (CN); Peng, Xiaogang, Chongqing, 400023 (CN); Li, Song, Chongqing, 400023 (CN)
(74) Representative: Staeger & Sperling Partnerschaftsgesellschaft mbB

(56) References cited:
- CN-A- 112 742 644
- DE-A1- 102004 006 044
- DE-A1- 102011 085 131
- US-A1- 2009 250 346

## Description

### Field of the Invention

The present disclosure belongs to the technical field of automobile production, and in particular, relates to an automatic skid offline-cleaning guidance and control system and method.

### Background of the Invention

In a painting workshop in the automobile industry, in order to prolong the service life of skids and to ensure that the production line is not shut down due to paint accumulation and adhesion, skids with serious paint accumulation and adhesion need to be cleaned offline. At present, manual inspection is mainly used to determine whether a skid needs to be taken offline, and the skid will be taken offline manually. However, long-term in the painting and spraying sites is detrimental to the health of people, resulting in high labor costs, and any omissions in the inspection may lead to incomplete cleaning and eventually cause losses by shutdown of the production line.

Therefore, there is a need to develop an automatic skid offline-cleaning guidance and control system and method.

### Summary of the Invention

It is an object of the present application to provide an automatic skid offline-cleaning guidance and control system and method for automatically monitoring paint fouling on skids and automatically guiding and controlling a skid that has reached the criterion for cleaning to be taken offline.

According to the present disclosure, an automatic skid offline-cleaning guidance and control system includes a PLC control module, a skid position tracking and paint fouling condition monitoring subsystem, a skid offline control subsystem, a skid detection subsystem, and a human-computer interaction interface, the PLC control module being connected to the skid position tracking and paint fouling condition monitoring subsystem, the skid offline control subsystem, the skid detection subsystem, and the human-computer interaction interface; wherein
the PLC control module is configured to read a serial number of a skid and identify a position of the skid;
the skid position tracking and paint fouling condition monitoring subsystem is configured to acquire the serial number of the skid and information about the position of the skid from the PLC control module, detect a paint fouling condition of the skid, and send a skid cleaning request to the PLC control module when determining that the skid needs to be cleaned;
the PLC control module sends a skid cleaning instruction to the skid offline control subsystem based on the skid cleaning request, and the skid offline control subsystem performs an offline operation based on the skid cleaning instruction;
the human-computer interaction interface is configured to display hardware status of the whole guidance and control system, information about the paint fouling condition of the skid, and information about the position of the skid.

Optionally, the skid position tracking and paint fouling condition monitoring subsystem includes a skid paint fouling detection and position monitoring module, a skid information data storage module, and a communication module, the skid paint fouling detection and position monitoring module being connected to the skid information data storage module and the communication module; wherein
the skid paint fouling detection and position monitoring module is configured to acquire the serial number of the skid and information about the position of the skid from the PLC control module to monitor a paint fouling condition of the skid and detect paint fouling on the skid, and send a skid cleaning request instruction to the PLC control module;
the skid information data storage module is configured to record the information about the position of the skid and a state of the skid, the state of the skid including an offline state and an online state;
the communication module is configured to communicate the information about the position of the skid, information about the state of the skid, and a cleaning request label.

Optionally, the skid offline control subsystem includes an input/output module, a first enabling control module, a first action control module, a skid offline control frequency converter, a skid offline control motor, a second enabling control module, a second action control module, a skid rotation control frequency converter, and a skid rotation control motor; the skid rotation control frequency converter being connected to the skid rotation control motor, the second enabling control module and the second action control module; the skid offline control frequency converter being connected to the skid offline control motor, the first enabling control module and the first action control module; the first enabling control module, the first action control module, the second enabling control module and the second action control module being connected to the input/output module, and the input/output module being connected to the PLC control module; wherein
the skid rotation control frequency converter is configured to control the skid rotation control motor to perform a rotation action upon reception of a rotation control instruction sent by the PLC control module through the second enabling control module and the second action control module;
the skid offline control frequency converter is configured to control the skid offline control motor to perform an offline action upon reception of an offline control instruction sent by the PLC control module through the first enabling control module and the first action control module;
the input-output module is configured for in-cabinet IO signal communication.

Optionally, the skid detection subsystem includes a skid path selection in-place detection switch, a skid offline in-place detection switch, a skid passing-point count detection module, an offline in-place skid information detection module, a skid information writing module, a skid rotation in-place detection switch, and a remote input/output module; the remote input/output module being connected to the skid path selection in-place detection switch, the skid offline in-place detection switch, the skid passing-point count detection module, the offline in-place skid information detection module, the skid information writing module, the skid rotation in-place detection switch and the PLC control module; wherein
the offline in-position skid information detection module is configured to detect the position of the skid, and acquire the serial number of the skid and information about the cleaning request;
the skid path selection in-position detection switch, the skid rotation in-position detection switch and the skid offline in-position detection switch are configured to detect the position of the skid;
the skid passing-point count detection module is configured to detect the position of the skid and write a cleaning request flag;
the skid information writing module is configured to change the cleaning request flag;
the remote input/output module is configured for distributed IO signal communication.

Optionally, the communication module is an Ethernet communication module.

Optionally, each of the first enabling control module, the first action control module, the second enabling control module and the second action control module is a relay.

Optionally, each of the skid passing-point count detection module, the offline in-position skid information detection module and the skid information writing module is an RFID module.

In a second aspect of the present disclosure, an automatic skid offline-cleaning guidance and control method, using the automatic skid offline-cleaning guidance and control system according to the present disclosure, includes the following steps of:
S1: paint fouling condition monitoring:
   when a skid detection subsystem senses a skid passing by, a skid position tracking and paint fouling condition monitoring subsystem reads a serial number of the skid through a PLC control module; the skid position tracking and paint fouling condition monitoring subsystem acquires the serial number of the skid and information about a position of the skid from the PLC control module, detects a paint fouling condition of the skid, and sends a skid cleaning request to the PLC control module when determining that the skid needs to be cleaned; and
S2: skid offline control:
   the PLC control module sends a skid cleaning instruction to the skid offline control subsystem based on the skid cleaning request, and the skid offline control subsystem performs an offline operation based on the skid cleaning instruction.

Optionally, the step S1 specifically includes:
S11: when a skid passing-point count detection module senses a skid passing by, a skid paint fouling detection and position monitoring module reads a serial number of the skid through the PLC control module;
S12: the skid paint fouling detection and position monitoring module determines whether the skid passing by a position of the skid passing-point count detection module is labeled as offline or not; if the skid is labeled as offline, the skid paint fouling detection and position monitoring module clears a passing-point count recorded in real time by a skid information data storage module to zero, and labels the skid as online; and if the skid is not labeled as offline;
S13: the skid paint fouling detection and position monitoring module calculates the passing-point account of each skid, and stores the passing-point account of each skid in the skid information data storage module; and
S14: the skid paint fouling detection and position monitoring module determines whether the passing-point count of the skid exceeds a preset threshold or not; if the passing-point count of the skid exceeds the preset threshold, the skid paint fouling detection and position monitoring module labels the serial number of the skid, whose passing-point count exceeds the preset threshold, with a cleaning request through the PLC control module and the skid passing-point count detection module, and a current paint fouling condition monitoring program is ended; and if the passing-point count of the skid does not exceed the preset threshold, the current paint fouling condition monitoring program is directly ended.

Optionally, the step S2 specifically includes:
S21: when the offline in-position skid information detection module senses a skid passing by, the PLC control module reads the serial number of the skid;
S22: the offline in-position skid information detection module detects whether the currently passed skid is labeled with a cleaning request or not; if the currently passed skid is labeled with a cleaning request, go to the next step; if the currently passed skid is not labeled with a cleaning request, the current skid offline control program is ended;
S23: the PLC control module outputs a rotation action signal for a skid rotation control motor in response to detection of a skid by a skid path selection in-position detection switch;
S24: the PLC control module outputs a stop signal for the skid rotation control motor and a start signal for a skid offline control motor in response to detection of a skid by a skid rotation in-position detection switch;
S25: the PLC control module outputs a stop signal for the skid offline control motor in response to detection of a skid by a skid offline in-position detection switch;
S26: the PLC control module changes a cleaning request flag through a skid information writing module; and
S27: the skid paint fouling detection and position monitoring module labels a state of the skid recorded in real time by the skid information data storage module as offline.

The present disclosure has the following advantages. The disclosed system and method is capable of automatically monitoring paint fouling on skids, and automatically guiding and controlling a skid that has reached the criterion for cleaning to be taken offline. Besides, the costs reduced, and manual inspection can be eliminated.

### Brief Description of the Drawings

Fig. 1 is a schematic block diagram of an automatic skid offline-cleaning guidance and control system in accordance with an embodiment of the present disclosure;
Fig. 2 is a flowchart illustrating paint fouling condition monitoring and control of the automatic skid offline-cleaning guidance and control system in accordance with an embodiment of the present disclosure; and
Fig. 3 is a flowchart illustrating skid offline control of the automatic skid offline-cleaning guidance and control system in accordance with an embodiment of the present disclosure.

In the figures: 1) skid offline control subsystem; 2) skid position tracking and paint fouling condition monitoring subsystem; 3) a PLC control module; 4) human-computer interaction interface; and 5) skid detection subsystem.

### Detailed Description of the Embodiments

Hereinafter, the present disclosure will be described in detail with reference to the accompanying drawings.

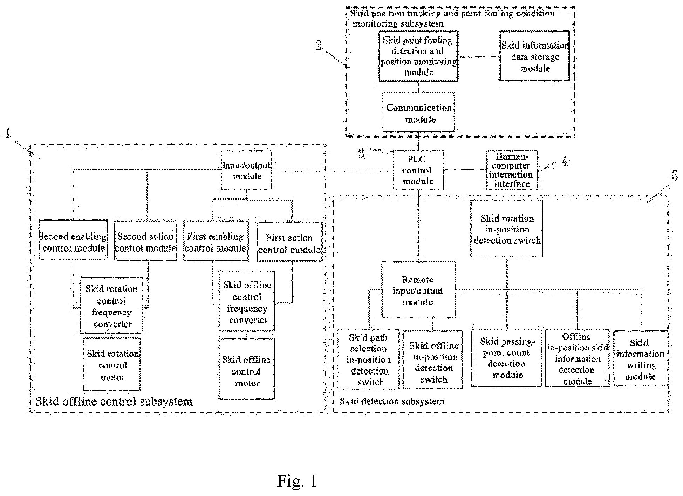

In this embodiment, as shown in Fig. 1, an automatic skid offline-cleaning guidance and control system includes a PLC control module 3, a skid position tracking and paint fouling condition monitoring subsystem 2, a skid offline control subsystem 1, a skid detection subsystem 5, and a human-computer interaction interface 4, the PLC control module 3 being connected to the skid position tracking and paint fouling condition monitoring subsystem 2, the skid offline control subsystem 1, the skid detection subsystem 5, and the human-computer interaction interface 4. The PLC control module 3 is configured to read a serial number of a skid and identify a position of the skid. The skid position tracking and paint fouling condition monitoring subsystem 2 is configured to acquire the serial number of the skid and information about the position of the skid from the PLC control module 3, detect a paint fouling condition of the skid, and send a skid cleaning request to the PLC control module 3 when determining that the skid needs to be cleaned. The PLC control module 3 sends a skid cleaning instruction to the skid offline control subsystem 1 based on the skid cleaning request, and the skid offline control subsystem 1 performs an offline operation on the skid based on the skid cleaning instruction. The human-computer interaction interface 4 is configured to display hardware status of the whole guidance and control system, information about the paint fouling condition of the skid, and information about the position of the skid.

As shown in Fig. 1, in this embodiment, the skid position tracking and paint fouling condition monitoring subsystem 2 includes a skid paint fouling detection and position monitoring module, a skid information data storage module, and a communication module, the skid paint fouling detection and position monitoring module being connected to the skid information data storage module and the communication module. The skid paint fouling detection and position monitoring module is configured to acquire the serial number of the skid and information about the position of the skid from the PLC control module 3 to monitor a paint fouling condition of the skid and detect paint fouling on the skid, and send a skid cleaning request instruction to the PLC control module 3. The skid information data storage module is configured to record the information about the position of the skid and a state of the skid, the state of the skid including an offline state and an online state; The communication module is configured to communicate the information about the position of the skid, information about the state of the skid, and a cleaning request label.

As shown in Fig. 1, in this embodiment, the skid offline control subsystem 1 includes an input/output module, a first enabling control module, a first action control module, a skid offline control frequency converter, a skid offline control motor, a second enabling control module, a second action control module, a skid rotation control frequency converter, and a skid rotation control motor; the skid rotation control frequency converter being connected to the skid rotation control motor, the second enabling control module and the second action control module; the skid offline control frequency converter being connected to the skid offline control motor, the first enabling control module and the first action control module; the first enabling control module, the first action control module, the second enabling control module and the second action control module being connected to the input/output module, and the input/output module being connected to the PLC control module 3. The skid rotation control frequency converter is configured to control the skid rotation control motor to perform a rotation action upon reception of a rotation control instruction sent by the PLC control module 3 through the second enabling control module and the second action control module. The skid offline control frequency converter is configured to control the skid offline control motor to perform an offline action upon reception of an offline control instruction sent by the PLC control module 3 through the first enabling control module and the first action control module. The input-output module is configured for in-cabinet IO signal communication.

As shown in Fig. 1, in this embodiment, the skid detection subsystem includes a skid path selection in-position detection switch, a skid offline in-position detection switch, a skid passing-point count detection module, an offline in-position skid information detection module, a skid information writing module, a skid rotation in-position detection switch, and a remote input/output module; the remote input/output module being connected to the skid path selection in-position detection switch, the skid offline in-position detection switch, the skid passing-point count detection module, the offline in-position skid information detection module, the skid information writing module, the skid rotation in-position detection switch and the PLC control module 3. The offline in-position skid information detection module is configured to detect the position of the skid, and acquire the serial number of the skid and information about the cleaning request. The skid path selection in-position detection switch, the skid rotation in-position detection switch and the skid offline in-position detection switch are configured to detect the position of the skid. The skid passing-point count detection module is configured to detect the position of the skid and write a cleaning request flag. The skid information writing module is configured to change the cleaning request flag. The remote input/output module is configured for distributed IO signal communication.

The system is capable of automatically monitoring paint fouling on skids, and automatically guiding and controlling a skid that has reached the criterion for cleaning to be taken offline.

In this embodiment, the communication module is an Ethernet communication module.

In this embodiment, each of the first enabling control module, the first action control module, the second enabling control module and the second action control module is a relay.

In this embodiment, each of the skid passing-point count detection module, the offline in-position skid information detection module and the skid information writing module is an RFID module.

In this embodiment, an automatic skid offline-cleaning guidance and control method, using the automatic skid offline-cleaning guidance and control system according to the embodiments of the present disclosure, includes the following steps of:
S1: paint fouling condition monitoring:
   when a skid detection subsystem 5 senses a skid passing by, a skid position tracking and paint fouling condition monitoring subsystem 2 reads a serial number of the skid through a PLC control module 3; the skid position tracking and paint fouling condition monitoring subsystem 2 acquires the serial number of the skid and information about a position of the skid from the PLC control module 3, detects a paint fouling condition of the skid, and sends a skid cleaning request to the PLC control module 3 when determining that the skid needs to be cleaned; and
S2: skid offline control:
   the PLC control module 3 sends a skid cleaning instruction to the skid offline control subsystem 1 based on the skid cleaning request, and the skid offline control subsystem 1 performs an offline operation on the skid based on the skid cleaning instruction.

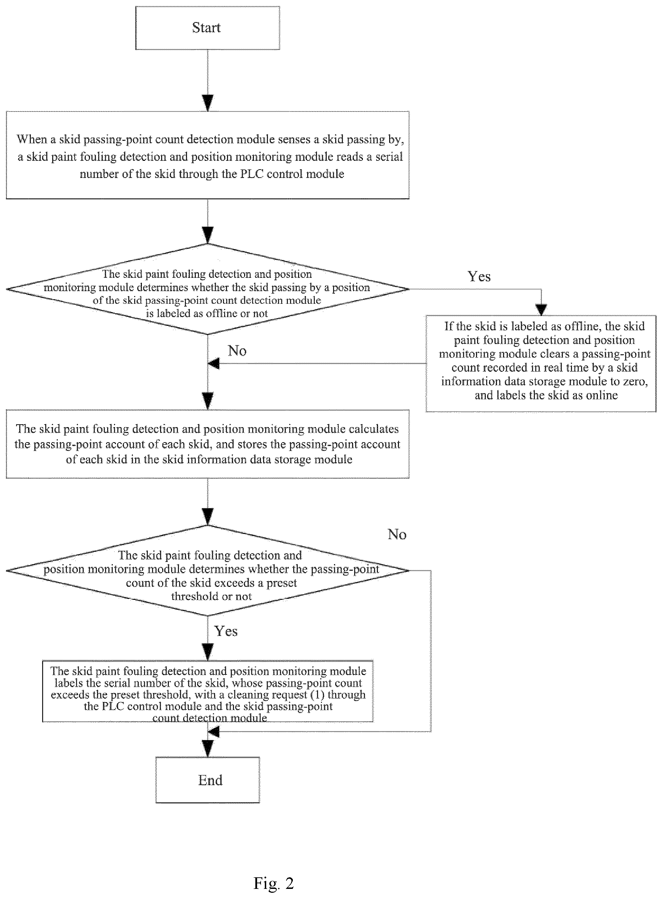

As shown in Fig. 2, in this embodiment, the step S1 specifically includes:
S11: when a skid passing-point count detection module senses a skid passing by, a skid paint fouling detection and position monitoring module reads a serial number of the skid through the PLC control module 3;
S12: the skid paint fouling detection and position monitoring module determines whether the skid passing by a position of the skid passing-point count detection module is labeled as offline or not; if the skid is labeled as offline, the skid paint fouling detection and position monitoring module clears a passing-point count recorded in real time by a skid information data storage module to zero, and labels the skid as online; and if the skid is not labeled as offline;
S13: the skid paint fouling detection and position monitoring module calculates the passing-point account of each skid, and stores the passing-point account of each skid in the skid information data storage module; and
S14: the skid paint fouling detection and position monitoring module determines whether the passing-point count of the skid exceeds a preset threshold or not; if the passing-point count of the skid exceeds the preset threshold, the skid paint fouling detection and position monitoring module labels the serial number of the skid, whose passing-point count exceeds the preset threshold, with a cleaning request (i.e., set a flat bit of the cleaning request to be 1) through the PLC control module 3 and the skid passing-point count detection module, and a current paint fouling condition monitoring program is ended; and if the passing-point count of the skid does not exceed the preset threshold, the current paint fouling condition monitoring program is directly ended.

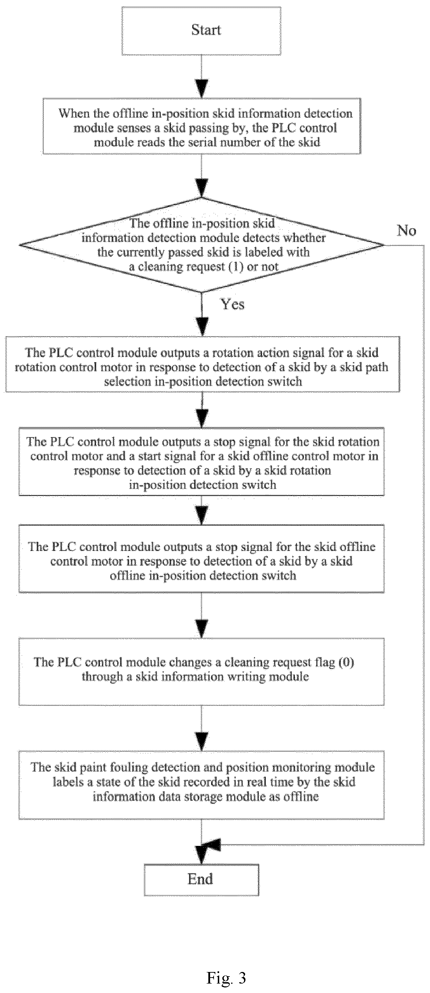

As shown in Fig. 3, in this embodiment, the step S2 specifically includes:
S21: when the offline in-position skid information detection module senses a skid passing by, the PLC control module 3 reads the serial number of the skid;
S22: the offline in-position skid information detection module detects whether the currently passed skid is labeled with a cleaning request or not; if the currently passed skid is labeled with a cleaning request (i.e., the flag bit is 1), go to the next step; if the currently passed skid is not labeled with a cleaning request (i.e., the flag bit is 0), the current skid offline control program is ended;
S23: the PLC control module 3 outputs a rotation action signal for a skid rotation control motor in response to detection of a skid by a skid path selection in-position detection switch;
S24: the PLC control module 3 outputs a stop signal for the skid rotation control motor and a start signal for a skid offline control motor in response to detection of a skid by a skid rotation in-position detection switch;
S25: the PLC control module 3 outputs a stop signal for the skid offline control motor in response to detection of a skid by a skid offline in-position detection switch;
S26: the PLC control module 3 changes a cleaning request flag (i.e., set the flag bit to be 0) through a skid information writing module; and
S27: the skid paint fouling detection and position monitoring module labels a state of the skid recorded in real time by the skid information data storage module as offline.

The method is capable of automatically monitoring paint fouling on skids, and automatically guiding and controlling a skid that has reached the criterion for cleaning to be taken offline.

The embodiments described above are preferred embodiments of the present disclosure, but the embodiments of the present disclosure are not limited to the embodiments described above, and any other changes, modifications, substitutions, combinations and simplifications made without departing from the principles of the present disclosure are to be construed as equivalent substitutions within the scope of the present disclosure.

## Claims

1. An automatic skid offline-cleaning guidance and control system, comprising: a PLC control module (3), a skid position tracking and paint fouling condition monitoring subsystem (2), a skid offline control subsystem (1), a skid detection subsystem (5), and a human-computer interaction interface (4), the PLC control module (3) being connected to the skid position tracking and paint fouling condition monitoring subsystem (2), the skid offline control subsystem (1), the skid detection subsystem (5), and the human-computer interaction interface (4); **characterized in that**
the PLC control module (3) is configured to read a serial number of a skid and identify a position of the skid;
the skid position tracking and paint fouling condition monitoring subsystem (2) is configured to acquire the serial number of the skid and information about the position of the skid from the PLC control module (3), detect a paint fouling condition of the skid, and send a skid cleaning request to the PLC control module (3) when determining that the skid needs to be cleaned;
the PLC control module (3) sends a skid cleaning instruction to the skid offline control subsystem (1) based on the skid cleaning request, and the skid offline control subsystem (1) performs an offline operation on the skid based on the skid cleaning instruction;
the human-computer interaction interface (4) is configured to display hardware status of the whole guidance and control system, information about the paint fouling condition of the skid, and information about the position of the skid.

2. The automatic skid offline-cleaning guidance and control system according to claim 1, wherein the skid position tracking and paint fouling condition monitoring subsystem (2) comprises a skid paint fouling detection and position monitoring module, a skid information data storage module, and a communication module, the skid paint fouling detection and position monitoring module being connected to the skid information data storage module and the communication module; wherein
the skid paint fouling detection and position monitoring module is configured to acquire the serial number of the skid and information about the position of the skid from the PLC control module (3) to monitor a paint fouling condition of the skid and detect paint fouling on the skid, and send a skid cleaning request instruction to the PLC control module (3);
the skid information data storage module is configured to record the information about the position of the skid and a state of the skid, the state of the skid including an offline state and an online state;
the communication module is configured to communicate the information about the position of the skid, information about the state of the skid, and a cleaning request label.

3. The automatic skid offline-cleaning guidance and control system according to claim 2, wherein the skid offline control subsystem (1) comprises an input/output module, a first enabling control module, a first action control module, a skid offline control frequency converter, a skid offline control motor, a second enabling control module, a second action control module, a skid rotation control frequency converter, and a skid rotation control motor; the skid rotation control frequency converter being connected to the skid rotation control motor, the second enabling control module and the second action control module; the skid offline control frequency converter being connected to the skid offline control motor, the first enabling control module and the first action control module; the first enabling control module, the first action control module, the second enabling control module and the second action control module being connected to the input/output module, and the input/output module being connected to the PLC control module (3); wherein
the skid rotation control frequency converter is configured to control the skid rotation control motor to perform a rotation action upon reception of a rotation control instruction sent by the PLC control module (3) through the second enabling control module and the second action control module;
the skid offline control frequency converter is configured to control the skid offline control motor to perform an offline action upon reception of an offline control instruction sent by the PLC control module (3) through the first enabling control module and the first action control module;
the input-output module is configured for in-cabinet IO signal communication.

4. The automatic skid offline-cleaning guidance and control system according to claim 3, wherein the skid detection subsystem comprises a skid path selection in-position detection switch, a skid offline in-position detection switch, a skid passing-point count detection module, an offline in-position skid information detection module, a skid information writing module, a skid rotation in-position detection switch, and a remote input/output module; the remote input/output module being connected to the skid path selection in-position detection switch, the skid offline in-position detection switch, the skid passing-point count detection module, the offline in-position skid information detection module, the skid information writing module, the skid rotation in-position detection switch and the PLC control module (3); wherein
the offline in-position skid information detection module is configured to detect the position of the skid, and acquire the serial number of the skid and information about the cleaning request;
the skid path selection in-position detection switch, the skid rotation in-position detection switch and the skid offline in-position detection switch are configured to detect the position of the skid;
the skid passing-point count detection module is configured to detect the position of the skid and write a cleaning request flag;
the skid information writing module is configured to change the cleaning request flag;
the remote input/output module is configured for distributed IO signal communication.

5. The automatic skid offline-cleaning guidance and control system according to any one of claims 2 to 4, wherein the communication module is an Ethernet communication module.

6. The automatic skid offline-cleaning guidance and control system according to claim 3 or 4, wherein each of the first enabling control module, the first action control module, the second enabling control module and the second action control module is a relay.

7. The automatic skid offline-cleaning guidance and control system according to claim 4, wherein each of the skid passing-point count detection module, the offline in-position skid information detection module and the skid information writing module is an RFID module.

8. An automatic skid offline-cleaning guidance and control method **characterized by** using the automatic skid offline-cleaning guidance and control system as claimed in any one of claims 4 to 7, the method comprising the steps of:
S1: paint fouling condition monitoring:
when a skid detection subsystem (5) senses a skid passing by, a skid position tracking and paint fouling condition monitoring subsystem (2) reads a serial number of the skid through a PLC control module (3); the skid position tracking and paint fouling condition monitoring subsystem (2) acquires the serial number of the skid and information about a position of the skid from the PLC control module (3), detects a paint fouling condition of the skid, and sends a skid cleaning request to the PLC control module (3) when determining that the skid needs to be cleaned; and
S2: skid offline control:
the PLC control module (3) sends a skid cleaning instruction to a skid offline control subsystem (1) based on the skid cleaning request, and the skid offline control subsystem (1) performs an offline operation on the skid based on the skid cleaning instruction.

9. The automatic skid offline-cleaning guidance and control method according to claim 8, wherein the step S1 specifically comprises:
S11: when a skid passing-point count detection module senses a skid passing by, a skid paint fouling detection and position monitoring module reads a serial number of the skid through the PLC control module (3);
S12: the skid paint fouling detection and position monitoring module determines whether the skid passing by a position of the skid passing-point count detection module is labeled as offline or not; if the skid is labeled as offline, the skid paint fouling detection and position monitoring module clears a passing-point count recorded in real time by a skid information data storage module to zero, and labels the skid as online; and if the skid is not labeled as offline;
S13: the skid paint fouling detection and position monitoring module calculates the passing-point account of each skid, and stores the passing-point account of each skid in the skid information data storage module; and
S14: the skid paint fouling detection and position monitoring module determines whether the passing-point count of the skid exceeds a preset threshold or not; if the passing-point count of the skid exceeds the preset threshold, the skid paint fouling detection and position monitoring module labels the serial number of the skid, whose passing-point count exceeds the preset threshold, with a cleaning request through the PLC control module (3) and the skid passing-point count detection module, and a current paint fouling condition monitoring program is ended; and if the passing-point count of the skid does not exceed the preset threshold, the current paint fouling condition monitoring program is directly ended.

10. The automatic skid offline-cleaning guidance and control method according to claim 9, wherein the step S2 specifically comprises:
S21: when the offline in-position skid information detection module senses a skid passing by, the PLC control module (3) reads the serial number of the skid;
S22: the offline in-position skid information detection module detects whether the currently passed skid is labeled with a cleaning request or not; if the currently passed skid is labeled with a cleaning request, go to the next step; if the currently passed skid is not labeled with a cleaning request, the current skid offline control program is ended;
S23: the PLC control module (3) outputs a rotation action signal for a skid rotation control motor in response to detection of a skid by a skid path selection in-position detection switch;
S24: the PLC control module (3) outputs a stop signal for the skid rotation control motor and a start signal for a skid offline control motor in response to detection of a skid by a skid rotation in-position detection switch;
S25: the PLC control module (3) outputs a stop signal for the skid offline control motor in response to detection of a skid by a skid offline in-position detection switch;
S26: the PLC control module (3) changes a cleaning request flag through a skid information writing module; and
S27: the skid paint fouling detection and position monitoring module labels a state of the skid recorded in real time by the skid information data storage module as offline.

## Patentansprüche

1. Leit- und Steuersystem für automatische Offline-Reinigung von Kufen, umfassend: ein PLC-Steuermodul (3), ein Teilsystem (2) zur Kufenpositionsbestimmung und Überwachung von Farbverschmutzungsbedingung, ein Offline-Kufensteuerteilsystem (1), ein Kufendetektionsteilsystem (5) und eine Mensch-Computer-Interaktionsschnittstelle (4), wobei das PLC-Steuermodul (3) mit dem Teilsystem (2) zur Kufenpositionsbestimmung und Überwachung von Farbverschmutzungsbedingung, dem Offline-Kufensteuerteilsystem (1), dem Kufendetektionsteilsystem (5) und der Mensch-Computer-Interaktionsschnittstelle (4) verbunden ist;
**dadurch gekennzeichnet, dass**
das PLC-Steuermodul (3) dazu konfiguriert ist, eine Seriennummer einer Kufe abzulesen und eine Position der Kufe zu identifizieren;
das Teilsystem (2) zur Kufenpositionsbestimmung und Überwachung von Farbverschmutzungsbedingung dazu konfiguriert ist, die Seriennummer der Kufe und Informationen über die Position der Kufe von dem PLC-Steuermodul (3) zu erfassen, eine Farbverschmutzungsbedingung der Kufe zu detektieren und eine Kufenreinigungsanforderung an das PLC-Steuermodul (3) zu senden, wenn bestimmt wird, dass die Kufe gereinigt werden muss;
das PLC-Steuermodul (3) eine Kufenreinigungsanweisung an das Offline-Kufensteuerteilsystem (1) auf Grundlage der Kufenreinigungsanforderung sendet und das Offline-Kufensteuerteilsystem (1) einen Offline-Betreib der Kufe auf Grundlage der Kufenreinigungsanweisung durchführt;
die Mensch-Computer-Interaktionsschnittstelle (4) dazu konfiguriert ist, Hardwarestatus des gesamten Leit- und Steuersystems, Informationen über die Farbverschmutzungsbedingung der Kufe und Informationen über die Position der Kufe anzuzeigen.

2. Leit- und Steuersystem für automatische Offline-Reinigung von Kufen nach Anspruch 1, wobei das Teilsystem (2) zur Kufenpositionsbestimmung und Überwachung von Farbverschmutzungsbedingung ein Modul zur Überwachung von Farbverschmutzungsdetektion und Position der Kufe, ein Kufeninformationsdatenspeichermodul und ein Kommunikationsmodul umfasst, wobei das Modul zur Farbverschmutzungsdetektion und Überwachung der Position der Kufe mit dem Kufeninformationsdatenspeichermodul und dem Kommunikationsmodul verbunden ist; wobei
das Modul zur Farbverschmutzungsdetektion und Überwachung der Position der Kufe dazu konfiguriert ist, die Seriennummer der Kufe und Informationen über die Position der Kufe von dem PLC-Steuermodul (3) zu erfassen, um eine Farbverschmutzungsbedingung der Kufe zu überwachen und eine Farbverschmutzung an der Kufe zu detektieren, und eine Kufenreinigungsanforderungsanweisung an das PLC-Steuermodul (3) zu senden;
das Kufeninformationsdatenspeichermodul dazu konfiguriert ist, die Informationen über die Position der Kufe und einen Zustand der Kufe aufzuzeichnen, wobei der Zustand der Kufe einen Offline-Zustand und einen Online-Zustand beinhaltet;
das Kommunikationsmodul dazu konfiguriert ist, die Informationen über die Position der Kufe, Informationen über den Zustand der Kufe und eine Reinigungsanforderungsbezeichnung zu kommunizieren.

3. Leit- und Steuersystem für automatische Offline-Reinigung von Kufen nach Anspruch 2, wobei das Offline-Kufensteuerteilsystem (1) ein Eingangs-/Ausgangsmodul, ein erstes Aktivierungssteuermodul, ein erstes Aktionssteuermodul, einen Offline-Kufensteuerfrequenzwandler, einen Offline-Kufensteuermotor, ein zweites Aktivierungssteuermodul, ein zweites Aktionssteuermodul, einen Kufenrotationssteuerfrequenzwandler und einen Kufenrotationssteuermotor umfasst; wobei der Kufenrotationssteuerfrequenzwandler mit dem Kufenrotationssteuermotor, dem zweiten Aktivierungssteuermodul und dem zweiten Aktionssteuermodul verbunden ist; wobei der Offline-Kufensteuerfrequenzwandler mit dem Offline-Kufensteuermotor, dem ersten Aktivierungssteuermodul und dem ersten Aktionssteuermodul verbunden ist; wobei das erste Aktivierungssteuermodul, das erste Aktionssteuermodul, das zweite Aktivierungssteuermodul und das zweite Aktionssteuermodul mit dem Eingangs-/Ausgangsmodul verbunden ist und das Eingangs-/Ausgangsmodul mit dem PLC-Steuermodul (3) verbunden ist; wobei
der Kufenrotationssteuerfrequenzwandler dazu konfiguriert ist, den Kufenrotationssteuermotor zu steuern, um einen Rotationsvorgang bei Empfang einer Rotationssteueranweisung, die von dem PLC-Steuermodul (3) durch das zweite Aktivierungssteuermodul und das zweite Aktionssteuermodul gesendet wird, durchzuführen;
der Offline-Kufensteuerfrequenzwandler dazu konfiguriert ist, den Offline-Kufensteuermotor zu steuern, um einen Offline-Vorgang bei Empfang einer Offline-Steueranweisung, die von dem PLC-Steuermodul (3) durch das erste Aktivierungssteuermodul und das erste Aktionssteuermodul gesendet wird, durchzuführen;
das Eingangs-/Ausgangsmodul zur integrierten EA-Signalkommunikation konfiguriert ist.

4. Leit- und Steuersystem für automatische Offline-Reinigung von Kufen nach Anspruch 3, wobei das Kufendetektionsteilsystem einen Schalter zur Detektion der korrekten Position der Kufenpfadauswahl, einen Schalter zur Offline-Detektion der korrekten Position der Kufe, ein Modul zur Detektion der Passierpunktanzahl der Kufe, ein Modul zur Offline-Detektion der Informationen zur korrekten Position der Kufe, ein Kufeninformationsschreibmodul, einen Schalter zur Detektion der korrekten Position der Kufenrotation und ein entferntes Eingangs-/Ausgangsmodul umfasst; wobei das entfernte Eingangs-/Ausgangsmodul mit dem Schalter zur Detektion der korrekten Position der Kufenpfadauswahl, dem Schalter zur Offline-Detektion der korrekten Position der Kufe, dem Modul zur Detektion der Passierpunktanzahl der Kufe, dem Modul zur Offline-Detektion der Informationen zur korrekten Position der Kufe, dem Kufeninformationsschreibmodul, dem Schalter zur Detektion der korrekten Position der Kufenrotation und dem PLC-Steuermodul (3) verbunden ist; wobei
das Modul zur Offline-Detektion der Informationen zur korrekten Position der Kufe dazu konfiguriert ist, die Position der Kufe zu detektieren und die Seriennummer der Kufe und Informationen über die Reinigungsanforderung zu erfassen;
der Schalter zur Detektion der korrekten Position der Kufenpfadauswahl, der Schalter zur Detektion der korrekten Information der Kufenrotation und der Schalter zur Offline-Detektion der korrekten Position der Kufe dazu konfiguriert sind, die Position der Kufe zu detektieren;
das Modul zur Detektion der Passierpunktanzahl der Kufe dazu konfiguriert ist, die Position der Kufe zu detektieren und eine Reinigungsanforderungsmarkierung zu schreiben;
das Kufeninformationsschreibmodul dazu konfiguriert ist, die Reinigungsanforderungsmarkierung zu verändern;
das entfernte Eingangs-/Ausgangsmodul zur verteilten EA-Signalkommunikation konfiguriert ist.

5. Leit- und Steuersystem für automatische Offline-Reinigung von Kufen nach einem der Ansprüche 2 bis 4, wobei das Kommunikationsmodul ein Ethernet-Kommunikationsmodul ist.

6. Leit- und Steuersystem für automatische Offline-Reinigung von Kufen nach Anspruch 3 oder 4, wobei jedes von dem ersten Aktivierungssteuermodul, dem ersten Aktionssteuermodul, dem zweiten Aktivierungssteuermodul und dem zweiten Aktionssteuermodul ein Relais ist.

7. Leit- und Steuersystem für automatische Offline-Reinigung von Kufen nach Anspruch 4, wobei jedes von dem Modul zur Detektion der Passierpunktanzahl der Kufe, dem Modul zur Offline-Detektion der Informationen zur korrekten Position der Kufe und dem Kufeninformationsschreibmodul ein RFID-Modul ist.

8. Leit- und Steuerverfahren für automatische Offline-Reinigung von Kufen, **gekennzeichnet durch** die Verwendung des Leit- und Steuersystems für automatische Offline-Reinigung von Kufen nach einem der Ansprüche 4 bis 7, wobei das Verfahren die folgenden Schritte umfasst:
S1: Überwachung der Farbverschmutzungsbedingung:
wenn ein Kufendetektionsteilsystem (5) eine passierende Kufe erfasst, liest ein Teilsystem (2) zur Kufenpositionsbestimmung und Überwachung von Farbverschmutzungsbedingung eine Seriennummer der Kufe durch ein PLC-Steuermodul (3) ab; erfasst das Teilsystem (2) zur Kufenpositionsbestimmung und Überwachung von Farbverschmutzungsbedingung die Seriennummer der Kufe und Informationen über eine Position der Kufe von dem PLC-Steuermodul (3), detektiert es eine Farbverschmutzungsbedingung der Kufe und sendet es eine Kufenreinigungsanforderung an das PLC-Steuermodul (3), wenn bestimmt wird, dass die Kufe gereinigt werden muss; und
S2: Offline-Steuerung der Kufe:
das PLC-Steuermodul (3) sendet eine Kufenreinigungsanweisung an ein Offline-Kufensteuerteilsystem (1) auf Grundlage der Kufenreinigungsanforderung und das Offline-Kufensteuerteilsystem (1) führt einen Offline-Vorgang an der Kufe auf Grundlage der Kufenreinigungsanweisung aus.

9. Leit- und Steuerverfahren für automatische Offline-Reinigung von Kufen nach Anspruch 8, wobei der Schritt S1 spezifisch Folgendes umfasst:
S11: wenn ein Modul zur Detektion der Passierpunktanzahl der Kufe eine passierende Kufe erfasst, liest ein Modul zur Farbverschmutzungsdetektion und Überwachung der Position der Kufe eine Seriennummer der Kufe durch das PLC-Steuermodul (3) ab;
S12: das Modul zur Farbverschmutzungsdetektion und Überwachung der Position der Kufe bestimmt, ob die Kufe, die eine Position des Moduls zur Detektion der Passierpunktanzahl der Kufe passiert, als offline gekennzeichnet ist oder nicht; wenn die Kufe als offline gekennzeichnet ist, löscht das Modul zur Farbverschmutzungsdetektion und Überwachung der Position der Kufe eine Passierpunktanzahl, die in Echtzeit von einem Kufeninformationsdatenspeichermodul aufgezeichnet wurde, auf null und kennzeichnet die Kufe als online; und wenn die Kufe nicht als offline gekennzeichnet ist;
S13: das Modul zur Farbverschmutzungsdetektion und Überwachung der Position der Kufe berechnet die Passierpunktanzahl jeder Kufe und speichert die Passierpunktanzahl jeder Kufe in dem Kufeninformationsdatenspeichermodul; und
S14: das Modul zur Farbverschmutzungsdetektion und Überwachung der Position der Kufe bestimmt, ob die Passierpunktanzahl der Kufe einen voreingestellten Schwellenwert überschreitet oder nicht; wenn die Passierpunktanzahl der Kufe den voreingestellten Schwellenwert überschreitet, kennzeichnet das Modul zur Farbverschmutzungsdetektion und Überwachung der Position der Kufe die Seriennummer der Kufe, deren Passierpunktanzahl den voreingestellten Schwellenwert überschreitet, mit einer Reinigungsanforderung durch das PLC-Steuermodul (3) und das Modul zur Detektion der Passierpunktanzahl der Kufe und wird ein aktuelles Programm zur Überwachung der Farbverschmutzungsbedingung beendet; und wenn die Passierpunktanzahl der Kufe den voreingestellten Schwellenwert nicht überschreitet, wird das aktuelle Programm zur Überwachung der Farbverschmutzungsbedingung direkt beendet.

10. Leit- und Steuerverfahren für automatische Offline-Reinigung von Kufen nach Anspruch 9, wobei der Schritt S2 spezifisch Folgendes umfasst:
S21: wenn das Modul zur Offline-Detektion der Informationen zur korrekten Position der Kufe eine passierende Kufe erfasst, liest das PLC-Steuermodul (3) die Seriennummer der Kufe ab;
S22: das Modul zur Offline-Detektion der Informationen zur korrekten Position der Kufe detektiert, ob die aktuell passierte Kufe mit einer Reinigungsanforderung gekennzeichnet ist oder nicht; wenn die aktuell passierte Kufe mit einer Reinigungsanforderung gekennzeichnet ist, wird zu dem nächsten Schritt übergegangen; wenn die aktuell passierte Kufe nicht mit einer Reinigungsanforderung gekennzeichnet ist, wird das aktuelle Programm zur Offline-Steuerung der Kufe beendet;
S23: das PLC-Steuermodul (3) gibt ein Rotationsaktionssignal für einen Kufenrotationssteuermotor als Reaktion auf die Detektion einer Kufe durch einen Schalter zur Detektion der korrekten Position der Kufenpfadauswahl aus;
S24: das PLC-Steuermodul (3) gibt ein Stoppsignal für den Kufenrotationssteuermotor und ein Startsignal für einen Offline-Kufensteuermotor als Reaktion auf eine Detektion einer Kufe durch einen Schalter zur Detektion der korrekten Position der Kufenrotation aus;
S25: das PLC-Steuermodul (3) gibt ein Stoppsignal für den Offline-Kufensteuermotor als Reaktion auf die Detektion einer Kufe durch einen Schalter zur Offline-Detektion der korrekten Position der Kufe aus;
S26: das PLC-Steuermodul (3) verändert eine Reinigungsanforderungsmarkierung durch ein Kufeninformationsschreibmodul; und
S27: das Modul zur Farbverschmutzungsdetektion und Überwachung der Position der Kufe kennzeichnet einen Zustand der Kufe, der in Echtzeit durch das Kufeninformationsdatenspeichermodul aufgezeichnet wurde, als offline.

## Revendications

1. Système de guidage et de commande automatique de nettoyage hors ligne de patins, comprenant : un module de commande PLC (3), un sous-système de suivi de position de patins et de surveillance d'état d'encrassement de peinture (2), un sous-système de commande hors ligne de patins (1), un sous-système de détection de patins (5) et une interface d'interaction homme-machine (4), le module de commande PLC (3) étant connecté au sous-système de suivi de position de patins et de surveillance d'état d'encrassement de peinture (2), au sous-système de commande hors ligne de patins (1), au sous-système de détection de patins (5) et à l'interface d'interaction homme-machine (4) ;
**caractérisé en ce que** le module de commande PLC (3) est configuré pour lire un numéro de série d'un patin et identifier une position du patin ;
le sous-système de suivi de position de patins et de surveillance d'état d'encrassement de peinture (2) est configuré pour acquérir le numéro de série du patin et des informations sur la position du patin à partir du module de commande PLC (3), détecter un état d'encrassement de peinture du patin et envoyer une demande de nettoyage du patin au module de commande PLC (3) lorsqu'il détermine que le patin doit être nettoyé ;
le module de commande PLC (3) envoie une instruction de nettoyage de patins au sous-système de commande hors ligne de patins (1) sur la base de la demande de nettoyage de patins, et le sous-système de commande hors ligne de patins (1) effectue une opération hors ligne sur le patin sur la base de l'instruction de nettoyage de patins ;
l'interface d'interaction homme-machine (4) est configurée pour afficher l'état de matériel de l'ensemble du système de guidage et de commande, des informations sur l'état d'encrassement de peinture du patin et des informations sur la position du patin.

2. Système de guidage et de commande automatique de nettoyage hors ligne de patins selon la revendication 1, dans lequel le sous-système de suivi de position de patins et de surveillance d'état d'encrassement de peinture (2) comprend un module de suivi de position de patins et de surveillance d'état d'encrassement de peinture, un module de stockage de données d'informations de patins et un module de communication, le module de de détection d'encrassement de peinture et de surveillance de position de patins étant connecté au module de stockage de données d'informations de patins et au module de communication ; dans lequel
le module de de de détection d'encrassement de peinture et de surveillance de position de patins est configuré pour acquérir le numéro de série du patin et des informations sur la position du patin à partir du module de commande PLC (3) pour surveiller une condition d'encrassement de peinture du patin et détecter l'encrassement de peinture sur le patin, et envoyer une instruction de demande de nettoyage du patin au module de commande PLC (3) ;
le module de stockage de données d'informations de patins est configuré pour enregistrer les informations sur la position du patin et un état du patin, l'état du patin comprenant un état hors ligne et un état en ligne ;
le module de communication est configuré pour communiquer les informations sur la position du patin, les informations sur l'état du patin et une étiquette de demande de nettoyage.

3. Système de guidage et de commande automatique de nettoyage hors ligne de patins selon la revendication 2, dans lequel le sous-système de commande hors ligne de patins (1) comprend un module d'entrée/de sortie, un premier module de commande d'activation, un premier module de commande d'action, un convertisseur de fréquence de commande hors ligne de patins, un moteur de commande hors ligne de patins, un second module de commande d'activation, un second module de commande d'action, un convertisseur de fréquence de commande de rotation de patins et un moteur de commande de rotation de patins ; le convertisseur de fréquence de commande de rotation de patins étant connecté au moteur de commande de rotation de patins, au second module de commande d'activation et au second module de commande d'action ; le convertisseur de fréquence de commande hors ligne de patins étant connecté au moteur de commande hors ligne de patins, au premier module de commande d'activation et au premier module de commande d'action ; le premier module de commande d'activation, le premier module de commande d'action, le second module de commande d'activation et le second module de commande d'action étant connectés au module d'entrée/de sortie, et le module d'entrée/de sortie étant connecté au module de commande **PLC** (3) ;
le convertisseur de fréquence de commande de rotation de patins est configuré pour commander le moteur de commande de rotation de patins pour effectuer une action de rotation suite à la réception d'une instruction de commande de rotation envoyée par le module de commande **PLC** (3) via le second module de commande d'activation et le second module de commande d'action ;
le convertisseur de fréquence de commande hors ligne de patins est configuré pour commander le moteur de commande hors ligne de patins pour effectuer une action hors ligne suite à la réception d'une instruction de commande hors ligne envoyée par le module de commande **PLC** (3) via le premier module de commande d'activation et le premier module de commande d'action ;
le module d'entrée/de sortie est configuré pour la communication de signaux d'E/S en armoire.

4. Système de guidage et de commande automatique de nettoyage hors ligne de patins selon la revendication 3, dans lequel le sous-système de détection de patins comprend un commutateur de détection de position de sélection de trajectoire de patins, un commutateur de détection de position hors ligne de patins, un module de détection de point de passage de patins, un module de détection d'informations de position hors ligne de patins, un module d'écriture d'informations de patins, un commutateur de détection de position de rotation de patins et un module d'entrée/de sortie distant ; le module d'entrée/de sortie distant étant connecté au commutateur de détection de position de sélection de trajectoire de patins, au commutateur de détection de position hors ligne de patins, au module de détection de comptage de points de passage de patins, au module de détection d'informations de position hors ligne de patins, au module d'écriture d'informations de patins, au commutateur de détection de position de rotation de patins et au module de commande **PLC** (3) ;
le module de détection d'informations de position hors ligne de patins est configuré pour détecter la position du patin et acquérir le numéro de série du patin et des informations sur la demande de nettoyage ;
le commutateur de détection de position de sélection de trajectoire de patins, le commutateur de détection de position de rotation de patins et le commutateur de détection de position hors ligne de patins sont configurés pour détecter la position du patin ;
le module de détection de comptage de points de passage de patin est configuré pour détecter la position du patin et écrire un indicateur de demande de nettoyage ; le module d'écriture d'informations de patins est configuré pour modifier l'indicateur de demande de nettoyage ;
le module d'entrée/de sortie distant est configuré pour la communication de signal IO distribuée.

5. Système de guidage et de commande de nettoyage automatique hors ligne de patins selon l'une quelconque des revendications 2 à 4, dans lequel le module de communication est un module de communication Ethernet.

6. Système de guidage et de commande de nettoyage automatique hors ligne de patins selon la revendication 3 ou 4, dans lequel chacun du premier module de commande d'activation, du premier module de commande d'action, du second module de commande d'activation et du second module de commande d'action est un relais.

7. Système de guidage et de commande de nettoyage automatique hors ligne de patins selon la revendication 4, dans lequel chacun du module de détection de comptage de points de passage de patins, du module de détection d'informations de position hors ligne de patins et du module d'écriture d'informations de patins est un module RFID.

8. Procédé de guidage et de commande de nettoyage automatique hors ligne de patins, **caractérisé par** l'utilisation du système de guidage et de commande de nettoyage automatique hors ligne de patins selon l'une quelconque des revendications 4 à 7, le procédé comprenant les étapes suivantes :
S1 : la surveillance d'état d'encrassement de peinture :
lorsqu'un sous-système de détection de patins (5) détecte le passage d'un patin, un sous-système de suivi de position de patins et de surveillance d'état d'encrassement de peinture (2) lit un numéro de série du patin via un module de commande PLC (3) ; le sous-système de suivi de position de patins et de surveillance d'état d'encrassement de peinture (2) acquiert le numéro de série du patin et des informations sur une position du patin à partir du module de commande PLC (3), détecte un état d'encrassement de peinture du patin et envoie une demande de nettoyage du patin au module de commande **PLC** (3) lors de la détermination que le patin doit être nettoyé ; et
S2 : la commande hors ligne de patins :
le module de commande **PLC** (3) envoie une instruction de nettoyage de patins à un sous-système de commande hors ligne de patins (1) sur la base de la demande de nettoyage de patins, et le sous-système de commande hors ligne de patins (1) effectue une opération hors ligne sur le patin sur la base de l'instruction de nettoyage de patins.

9. Procédé de guidage et de commande de nettoyage automatique hors ligne des patins selon la revendication 8, dans lequel l'étape S1 comprend spécifiquement
S11 : lorsqu'un module de détection de points de passage de patins détecte le passage d'un patin, un module de détection d'encrassement de peinture et de surveillance de position de patins lit un numéro de série du patin via le module de commande **PLC** (3) ;
S12 : le module de détection d'encrassement de peinture et de surveillance de position de patin détermine si le patin passant par une position du module de détection de comptage de points de passage de patins est étiqueté comme hors ligne ou non ; si le patin est étiqueté comme hors ligne, le module de détection d'encrassement de peinture et de surveillance de position de patin efface un comptage de points de passage enregistré en temps réel par un module de stockage de données d'informations de patin à zéro, et étiquette le patin comme en ligne ; et si le patin n'est pas étiqueté comme hors ligne ;
S13 : le module de détection d'encrassement de peinture et de surveillance de position de patins calcule le compte de points de passage de chaque patin et stocke le compte de points de passage de chaque patin dans le module de stockage de données d'informations de patins ; et
S14 : le module de détection d'encrassement de peinture et de surveillance de position de patins détermine si le nombre de points de passage du patin dépasse un seuil prédéfini ou non ; si le nombre de points de passage du patin dépasse le seuil prédéfini, le module de détection d'encrassement de peinture et de surveillance de position de patins étiquette le numéro de série du patin, dont le nombre de points de passage dépasse le seuil prédéfini, avec une demande de nettoyage via le module de commande **PLC** (3) et le module de détection de nombre de points de passage de patins, et un programme actuel de surveillance d'état d'encrassement de peinture est terminé ; et si le nombre de points de passage du patin ne dépasse pas le seuil prédéfini, le programme actuel de surveillance d'état d'encrassement de peinture est directement terminé.

10. Procédé de guidage et de commande automatique du nettoyage hors ligne des patins selon la revendication 9, dans lequel l'étape S2 comprend spécifiquement
S21 : lorsque le module de détection d'informations hors ligne de patins détecte le passage d'un patin, le module de commande **PLC** (3) lit le numéro de série du patin ; S22 : le module de détection d'informations de position hors ligne de patins détecte si le patin actuellement passé est étiqueté avec une demande de nettoyage ou non ; si le patin actuellement passé est étiqueté avec une demande de nettoyage, le passage à l'étape suivante ; si le patin actuellement passé n'est pas étiqueté avec une demande de nettoyage, le programme de commande hors ligne de patins actuel est terminé ;
S23 : le module de commande **PLC** (3) émet un signal d'action de rotation pour un moteur de commande de rotation de patins en réponse à la détection d'un patin par un commutateur de détection de position de sélection de trajectoire de patins ;
S24 : le module de commande **PLC** (3) émet un signal d'arrêt pour le moteur de commande de rotation de patins et un signal de démarrage pour un moteur de commande hors ligne de patins en réponse à la détection d'un patin par un commutateur de détection de position de rotation de patins ;
S25 : le module de commande **PLC** (3) émet un signal d'arrêt pour le moteur de commande hors ligne de patins en réponse à la détection d'un patin par un commutateur de détection de position hors ligne de patins ;
S26 : le module de commande **PLC** (3) modifie un indicateur de demande de nettoyage via un module d'écriture d'informations de patins ; et
S27 : le module de détection d'encrassement de peinture et de surveillance de position de patins étiquette un état du patin enregistré en temps réel par le module de stockage de données d'informations de patins comme étant hors ligne.
